# EUROPEAN PATENT SPECIFICATION

(11) **EP 0 531 007 B1**
(45) Date of publication and mention of the grant of the patent: **13.11.1996**
(21) Application number: 92307513.9
(22) Date of filing: 17.08.1992
(51) Int. Cl.: B60C 15/024

(54) **Heavy duty tubeless pneumatic radial tires**
Radiale schlauchlose Luftreifen für LKW's
Bandages pneumatiques radiaux sans chambre pour poids-lourds

(30) Priority: 29.08.1991 JP 242390/91
(43) Date of publication of application: 10.03.1993
(73) Proprietor: BRIDGESTONE CORPORATION, Tokyo 104 (JP)
(72) Inventor: Nakamura, Masao, Arakawa-ku, Tokyo (JP); Tokunaga, Seiichiro, Kodaira City, Tokyo (JP)
(74) Representative: Whalley, Kevin

(56) References cited:
- EP-A- 0 129 675
- EP-A- 0 434 206
- EP-A- 0 434 403
- WO-A-92/10373
- FR-A- 2 275 323
- FR-A- 2 383 030
- GB-A- 2 004 508

## Description

The present invention relates to heavy duty pneumatic tires represented by tires for trucks and buses and adapted to be used under heavy loads. In particular, the present invention aims to provide heavy duty tubeless pneumatic radial tires which can improve workability in assembling the tire to a rim and detaching the tire from the rim, can advantageously prevent damage of the bead portions in such assembling and detaching operations, and can improve durability of bead portions so as to extend their use life over a plural number of recapping times, as sound base tires which need substantially no repair on recapping or retreading peculiar to the tires of this kind.

In the heavy duty pneumatic tire of this kind, it is indispensable that every time when a slip sign begins to appear on a tread land portion through uniform wearing (ordinarily called "complete wearing") of the tread rubber to terminate use life of the tire, the used tire is detached from the rim, the remaining rubber is peeled off after passing a given examination, a base tire is produced by repairing the belt layer of the tire if necessary, and a fresh tread rubber is applied to the base tire for recapping.

However, particularly in the case of a pneumatic radial tire for a so-called 15° tapered drop-center rim among the pneumatic radial tires, in order to assuredly prevent air leakage, a tightening interference is set larger at a toe portion of the bead portion and a hard chafer rubber is used as a outer rubber skin of the bead portion. Therefore, it is often likely that the toe is broken when the tire is detached from the rim after the wearing in use.

When the toe is broken, the reinforcing element, for example nylon chafer or wire chafer, inside the bead portion is exposed to outside, and water or air directly enters the tire through cords used in such a reinforcing element to cause corrosion. Consequently, the cords of the ply are cut, which causes problems such as separation, and the tire can be no longer used again as a base tire, so that the tire has to be disposed of after a single period of use.

The toe may be broken in not only a recapped tire but also a fresh tire when the tire is assembled onto a rim. In the latter case, this may greatly deteriorate and diminish even durability which assures only one use life.

On the contrary, if the inner diameter of the bead portion is set greater than a normal value, the operation of assembling the tire to the rim and detaching the tire therefrom is facilitated, but it is feared that the air leakage-preventing performance is damaged. At present this problem has not been fully investigated.

As mentioned above, the inclined angle of the seat base is ordinarily 15° ± 1° in the case of the 15° tapered drop-center rim, whereas the bead base portion of the conventional tubeless tire for this 15° tapered drop-center rim has a two stage taper structure in which a part of the bead base portion has the same inclined angle as that of the seat base in an area from the heel to a location axially inwardly spaced from the heel by a distance of almost 1/2 of the axial width of the bead base and the remaining part of the bead base extending up to the toe is more greatly radially inclined. By so doing, the interference of the bead base of the tire to the seat base is increased at the toe to raise the contact pressure between the bead base and assuredly support the bead portion with the prevention of the air leakage. However, the inner diameter of the bead toe naturally becomes smaller in this case, so that when the tire is to be fitted around the rim or detached therefrom, impinging of the toe against the rim becomes greater. Consequently, since the toe receives excessive forces, it is likely to be damaged.

In such a tire a hard rubber chafer is arranged in the bead base portion to reduce wearing of the bead base including the bead toe upon contacting with the rim. Since such a rubber chafer becomes hardened and brittle through receipt of heat inevitably generated during rotating of the tire, the toe is also likely to be broken on fitting and detaching the tire relative to the rim.

Since demand has been increasing to recap and re-use the heavy duty tubeless pneumatic radial tires, the number of times for fitting and detaching the tires relative to the rims increases. Despite prolonged tire-running distances, the casing of the tire itself can maintain its surplus service life. Accordingly, it is now an important problem to improve durability of the bead portion with enhancement of heat hysteresis.

Regarding this, the present inventors have observed and investigated the fitness condition between the bead base of the tire and the seat base of the rim in the state that the tire was assembled onto the rim and inflated at a given internal pressure. Then, the inventors recognized the fact that the bead base slightly floated from the seat base of the rim at substantially a half width of the bead base located near the toe, and the bead base did not contact the seat base there. This is because since the internal pressure is high in the case of the heavy duty tire, the carcass ply is strongly stretched and the tire is deformed to release the bead toe from the seat base of the rim. Therefore, it was found that since the internal pressure is maintained while substantially a half axial width portion of the bead portion near the bead heel and the area which is axially outwardly located from the heel and touches the flange tightly contact the rim, it is of no particular meaning to give an excess interference to the bead toe.

Based on this knowledge, it is an aim of the present invention to provide a heavy duty tubeless pneumatic radial tire of the above-mentioned kind to be assembled onto a rim having a 15° tapered seat base to form a tire wheel, in which workability is improved in fitting and detaching the tire relative to the rim, and accordingly so-called toe breakage is advantageously avoided, and the tire can maintain its soundness even under renewal of the wear life of the tread several times.

Attention is also drawn to EP-A-0 432 206, which discloses the features of the pre-characterizing part of claim 1 of the present application; and to FR-A-2 275 323.

The present invention provides a heavy duty tubeless pneumatic radial tire comprising a main reinforcing element and a pair of bead portions, the said main reinforcing element including a radial carcass composed of at least one ply having cords arranged in substantially radial planes and a belt composed of at least three plies surrounding a toroidal crown portion of said radial carcass and each having cords arranged in parallel to one another, at least one ply of the radial carcass being wound around each of a pair of bead cores, each of said bead cores being located inside an outer skin rubber of each of respective one of the bead portions including said at least one ply of the radial carcass wound around the bead core, wherein each of said bead portions has a bead base portion including a near-heel zone and a near-toe zone, characterized in that said near-heel zone has an inclined angle not less than a base angle of a rim having a seat base tapered at an inclined angle of approximately 15° suitable for fitting the tire to the rim, said near-toe zone is located at an area up to a toe of the bead portion from a location spaced axially inwardly from a heel of the bead base portion by not less than 1/2 of a distance between the bead heel and the bead toe, said near-toe zone is not substantially inclined, and an inner diameter of said near-toe zone is in a range of not less than 95% but not more than 97% of a normal rim diameter.

According to the present invention, it is preferable that the near-heel zone extends from the heel to a location axially inwardly spaced from the heel by 1/2 to 4/5 of the distance between the heel and the toe. Further, it is preferable that the inclined angle of the near-heel zone is 17° to 25°.

The invention, will be further described with reference to the accompanying drawings, wherein:
Fig. 1 is a sectional view of a bead portion of a heavy duty tubeless pneumatic radial tire according to the present invention; and
Fig. 2 is a sectional view of a bead portion of a conventional heavy duty tubeless radial tire.

In the present invention, the radial carcass is made of at least one but not more than two or three rubberized layers containing parallel cords made of a metal such as steel or parallel cords made of aramid fibers having properties comparable to those of metal cords or polyester or nylon fibers. That the cords are arranged within substantially radial planes means that the cords cross the equatorial plane of the tire at 90° or at an angle of very near 90°.

At least one ply of the radial carcass is turned up around each of a pair of the bead cores from an axially inner side to an axially outer side of the tire, and the turn-up portion of the carcass ply and the bead core are located in a rubber outer skin to form the bead portion. It is preferable to use in a conventional manner a steel chafer in which steel cords are obliquely arranged relative to the cords of the radial carcass or a nylon chafer in which the cords are crossed relative to the cords of the radial carcass.

As in the conventional technique, the belt surrounds the toroidal crown of the radial carcass, and is composed of at least three belt plies each containing parallel cords, two belt plies remote from the radial carcass having cords arranged such that the cords in one belt ply may intersect with those in the other belt ply via the equatorial plane of the tire and arranged at a shallow angle relative to the tire equatorial plane, and one belt ply nearest to the radial carcass having the cords arranged at an angle between the above shallow angle and the cord angle of the radial carcass, and further these belt layers may be entirely or partially surrounded with another cord ply.

The tubeless pneumatic radial tire according to the present invention is adapted to be fitted to a rim having the seat base ordinarily tapered at 15°, and the bead portion of the tire is tightly fitted around the 15° tapered seat base of the rim.

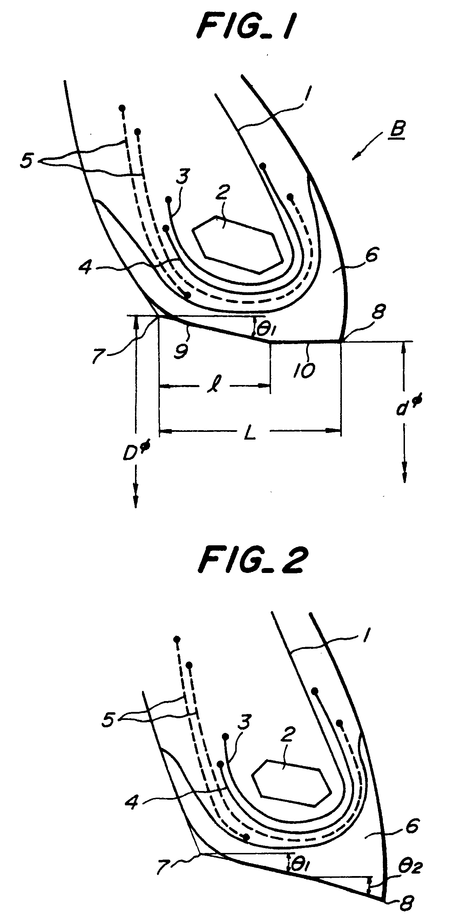

Fig. 1 illustrates a bead portion B of a heavy duty tubeless pneumatic radial tire according to the present invention only in a left sectional view of the tire, and the right side of the tire is symmetrical with the left side. The other portions are conventional, and illustration thereof is therefore omitted.

In the embodiment of Fig. 1, the tire includes a radial carcass 1 composed of one ply containing steel cords, a bead core 2, a turn-up portion 3 of the radial carcass 1 turned up around and along the bead core 2, a steel chafer 4, a nylon chafer 5, a rubber chafer 6, a bead heel 7 and a bead toe 8.

The bead portion B has a bead base constituted by a near-heel zone 9 and a near-toe portion 10. The near-heel zone 9 has an inclination angle equal to or greater than a base angle (15°) of a seat base of the above-mentioned rim (not shown). The near-toe zone 10 denotes a portion of the bead base located up to the bead toe 8 from a location spaced axially inwardly from the bead heel 7 by not less than 1/2 of a distance L from the bead heel 7 to the bead toe 8. This near-toe zone 10 is not substantially inclined in the radial direction. The inner diameter D of the bead heel 7 is slightly smaller than a normal rim diameter, for example about 99.4% of the normal rim diameter, and the inner diameter of the near-toe zone is in a range of not less than 95% but not more than 97% of the normal rim diameter.

The reason why the inner diameter D of the bead heel 7 is made slightly smaller than the normal rim diameter, i.e. set at about 99.4% of the normal rim diameter is the same with respect to the conventional tire technique. According to the present invention, it is preferable that the near-heel zone 9 which is located from the heel to a position located between the bead heel 7 and the bead toe 8 and axially inwardly spaced from the heel by a distance ℓ equal to about 1/2-4/5 of the distance L between the heel and the toe has an inclined taper angle equal to or greater than the base angle of the seat base of the 15° tapered rim so as to ensure sufficient tightening interface and thereby more effectively prevent the leakage of air. Further, it is preferable that the inclined angle of the near-heel zone 9 is about 17° to about 25°, because the fitting of the bead portion B to the rim may be deteriorated if this inclination angle is more than around 30°.

The near-toe zone 10 continued to the near-heel zone 9 is constituted by an cylindrical inner surface extending over an axial distance of 1/5L to 1/2L, particularly 0.22L to 0.47L, and having an inner diameter not substantially varied. If the inner diameter of the near-toe zone 10 is less than 95% of the normal rim diameter, it is difficult to assemble the tire to the rim, and the bead toe 8 is likely to be damaged due to vigorous rubbing of the bead toe with the rim flange when the tire is fitted to the rim or detached therefrom. On the other hand, if the inner diameter of the near-toe zone 10 is more than 97% of the normal rim diameter, the bead base is insufficiently tightened to the seat base of the rim.

The present invention will be explained in more detail with reference to the following examples.

### Examples

After a tire having a tire size of TBR 11R 22.5 was fitted to a rim having a rim size of 7.50 × 22.5, and the tire was subjected to a drum-running test over 100,000 km under conditions that the pneumatic pressure, the load and the speed were set at 7.0 kgf/cm², 3000 kgw and 60 km/hr, respectively. Then, the tire was picked by a rim-detaching exchanger, and detached from the rim, and occurrence of breakage of the bead toe was checked.

The test tire had the following construction.

One ply in which steel cords having a 3 + 9 twisted structure were radially arranged at a density of the cords buried per unit length of 30.3 cords/50 mm was turned up around a bead core 2 from an axially inner side to an axially outer side of the tire, and a height of a turn-up portion 3 was set at 0.16 times as large as a sectional height of the radial carcass. The turn-up portion 3 of the radial carcass 1 covered a bead core 2 from a radially lower position in cooperation with a main body of the carcass. A steel chafer 4 was arranged around the bead core through the radial carcass, and had steel cords (twisted construction: 3 + 9 and number of cords buried per unit length: 30.3 cords/50 mm) inclined relative to the cords of the carcass ply at an intersecting angle of 30°. A nylon chafer 5 was composed of two nylon cord plies, and arranged up to a position far higher than radially outer ends of the turn-up portion 3 of the radial carcass 1 and the steel chafer 4. The nylon cord layers each had nylon cords (1260 d/2 and 33.0 cords/50 mm) inclined at an intersecting angle of 30° relative to the cords of the carcass ply. One of the nylon cord plies of the nylon chafer 5 was arranged immediately under one bead core 2, and the other was arranged at a location radially lower than the steel chafer 4 on the axially inner side of the tire. A rubber chafer 6 having a hardness of 74° was provided as an outer skin of the bead portion B.

The bead portion B of the heavy duty pneumatic radial tire according to the present invention is shown in Fig. 1. A comparative tire was prepared as shown in Fig. 1. A prior art tire, as shown in Fig. 2, had the bead portion having a two-stage inclined structure in which the inclined angles θ₁ and θ₂ were set at 17° and 25°, respectively, at the near-heel zone and the near-toe zone over the position between the bead heel 7 and the bead toe 8 to make the contact pressure at the bead base higher than that at the near-toe zone.

In each case, the width L of the bead base was set at 32 mm.

The results obtained are shown in the following Table 1.

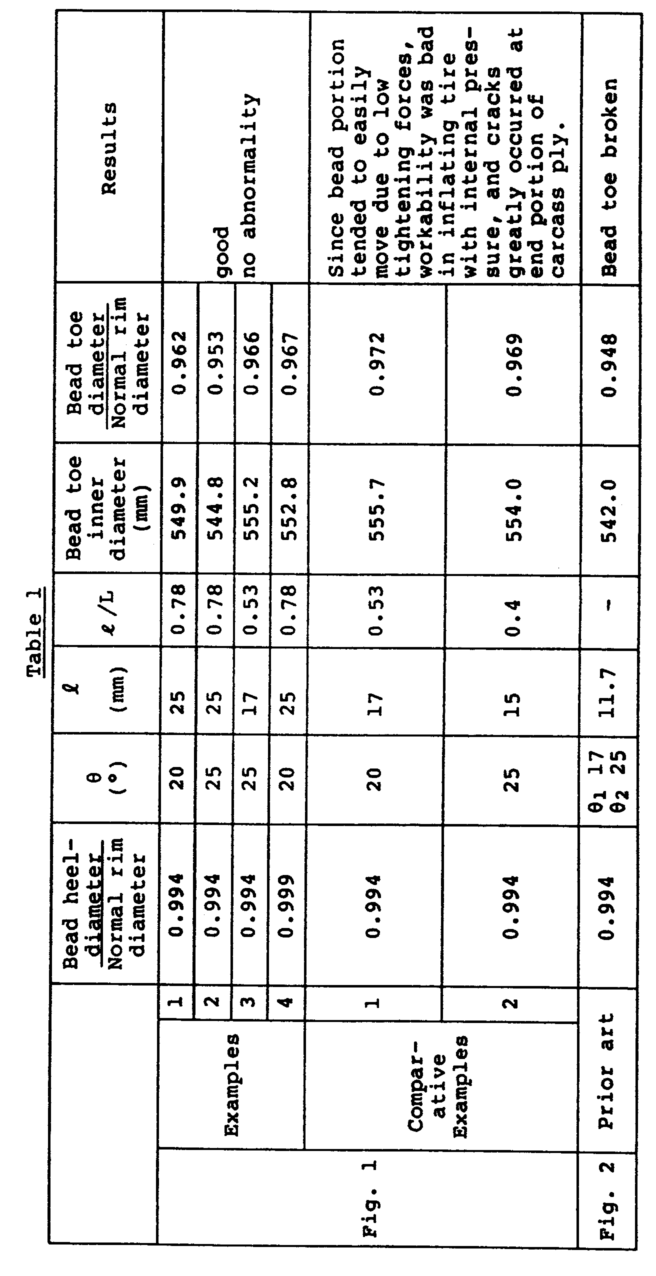

According to the present invention, even after the tread was completely worn during use, there is no danger that the bead portion is damaged when the tire is detached from the rim, and workability can be improved in assembling the tire to the rim. In addition, the bead portion has enough durability to have the soundness required as a base tire for recapping the tire having completed its wear life.

## Claims

1. A heavy duty tubeless pneumatic radial tire comprising a main reinforcing element and a pair of bead portions (B), said main reinforcing element including a radial carcass (1) composed of at least one ply having cords arranged in substantially radial planes and a belt composed of at least three plies surrounding a toroidal crown portion of said radial carcass and each having cords arranged in parallel to one another, at least one ply of the radial carcass being wound around each of a pair of bead cores (2), each of said bead cores being located inside an outer skin rubber of each of respective one of the bead portions including said at least one ply of the radial carcass wound around the bead core, wherein each of said bead portions has a bead base portion including a near-heel zone (9) and a near-toe zone (10), characterized in that said near-heel zone (9) has an inclined angle not less than a base angle of a rim having a seat base tapered at an inclined angle of approximately 15° suitable for fitting the tire to the rim, said near-toe zone (10) is located at an area up to a toe (8) of the bead portion from a location spaced axially inwardly from a heel (7) of the bead base portion by not less than 1/2 of a distance (L) between the bead heel and the bead toe, said near-toe zone (10) is not substantially inclined, and an inner diameter of the near-toe zone is in a range of not less than 95% but not more than 97% of a normal rim diameter.

2. A pneumatic radial tire as claimed in Claim 1, characterized in that the said near-heel zone (9) extends over a distance (ℓ) being 1/2 to 4/5 of the distance (L) from the heel (7) to the toe (8).

3. A pneumatic radial tire as claimed in Claim 1 or 2, characterized in that the inclined angle of the near-heel zone (9) is 17° to 25°.

## Patentansprüche

1. Radialer schlauchloser Luftreifen für LKWs, mit einem Hauptverstärkungselement und zwei Wulstbereichen (B), wobei das Hauptverstärkungselement eine radiale Karkasse (1) umfaßt, die aus mindestens einer Lage besteht, die Cordfäden aufweist, die in im wesentlichen radialen Ebenen angeordnet sind, und einem Gürtel, der aus mindestens drei Lagen besteht, die einen toroidförmigen Kronenbereich der radialen Karkasse umgeben, und von denen jede parallel zueinander angeordnete Cordfäden aufweist, wobei mindestens eine Lage der radialen Karkasse um jeden von zwei Wulstkernen (2) geschlungen ist, wobei jeder der Wulstkerne innerhalb eines Außenhautgummis von jedem der Wulstbereiche gelegen ist, der die um den Wulstkern geschlungene, mindestens eine Lage der radialen Karkasse einschließt, wobei jeder der Wulstbereiche einen Wulstbasisbereich hat, der eine fersennahe Zone (9) und eine zehennahe Zone (10) umfaßt, dadurch gekennzeichnet, daß die fersennahe Zone (9) einen Neigungswinkel hat, der nicht kleiner als ein Basiswinkel einer Felge ist, die eine Sitzbasis hat, die unter einem Neigungswinkel von ungefähr 15°, der zum Anbringen des Reifens auf der Felge geeignet ist, konisch verläuft, die zehennahe Zone (10) in einem Gebiet gelegen ist, das von einer Stelle, die von einer Ferse (7) des Wulstbasisbereichs axial nach innen einen Abstand von nicht weniger als 1/2 der Strecke (L) zwischen der Wulstferse und der Wulstzehe hat, bis zu einer Zehe (8) reicht, wobei die zehennahe Zone (10) nicht wesentlich geneigt ist, und der innere Durchmesser der zehennahen Zone in einem Bereich von nicht weniger als 95% und nicht mehr als 97% des Durchmessers einer normalen Felge liegt`

2. Radialer Luftreifen gemäß Anspruch 1, dadurch gekennzeichnet, daß sich die fersennahe Zone (9) über eine Strecke (ℓ) erstreckt, die 1/2 bis 4/5 der Strecke (L) von der Ferse (7) bis zu der Zehe (8) ist.

3. Radialer Luftreifen gemäß Anspruch 1 oder 2, dadurch gekennzeichnet, daß der Neigungswinkel der fersennahen Zone (9) 17 bis 25° beträgt.

## Revendications

1. Bandage pneumatique radial sans chambre à air pour poids lourds, comprenant un élément de renforcement principal et une paire de parties de talon (B), ledit élément de renforcement principal englobant une carcasse radiale (1) composée d'au moins une nappe, comportant des câblés agencés dans des plans pratiquement radiaux et une ceinture composée d'au moins trois nappes entourant une partie de sommet toroïdale de ladite carcasse radiale, comportant chacune des câblés agencés parallèlement les uns aux autres, au moins une nappe de la carcasse radiale étant enroulée autour de chacune d'une paire de tringles (2), chacune desdites tringles étant agencée à l'intérieur d'un caoutchouc d'enveloppe extérieur de chacune des parties de talon respectives, englobant ladite au moins une nappe de carcasse radiale enroulée autour de la tringle, chacune desdites parties de talon comportant une partie de base de talon englobant une zone proche du bout (9) et une zone proche de la pointe (10), caractérisé en ce que ladite zone proche du bout (9) a un angle incliné non inférieur à un angle de base d'une jante ayant une base de siège effilée à un angle incliné d'environ 15°, approprié pour l'ajustement du pneumatique sur la jante, ladite zone proche de la pointe (10) étant située au niveau d'une surface remontant jusqu'à une pointe (8) de la partie de talon à partir d'un un emplacement espacé axialement vers l'intérieur d'un bout (7) de la partie de base de talon d'une distance ne représentant pas moins de la moitié d'une distance (L) entre le bout du talon et la pointe du talon, ladite zone proche du bout (10) n'étant pas fortement inclinée, et un diamètre interne de la zone proche de la pointe étant compris dans un intervalle ne représentant pas moins de 95% mais pas plus de 97% d'un diamètre normal de jante.

2. Bandage pneumatique radial selon la revendication 1, caractérisé en ce que ladite zone proche du bout (9) s'étend sur une distance (ℓ) représentant de 1/2 à 4/5 de la distance (L) entre le bout (7) et la pointe (8).

3. Bandage pneumatique radial selon les revendications 1 ou 2, caractérisé en ce que l'angle incliné de la zone proche du bout (9) est compris entre 17° et 25°.
